# EUROPEAN PATENT APPLICATION

(11) **EP 1 249 388 A2**
(43) Date of publication of application: **16.10.2002**
(21) Application number: 02252571.1
(22) Date of filing: 10.04.2002
(51) Int. Cl.: B62K 27/00

(54) **Carts for use as trailers and/or trolleys**

(30) Priority: 10.04.2001 GB 0109043
(71) Applicant: Lee, Andrew James, Folkestone, Kent CT20 3TA (GB)
(72) Inventor: Lee, Andrew James, Folkestone, Kent CT20 3TA (GB)
(74) Representative: Coles, Graham Frederick

(57) **Abstract**

A two-wheel trailer/trolley cart has a load-carrying frame (4) pivotally-mounted on the rotational axis of the wheels (2) within a larger frame (8) that is also pivotally mounted on that axis. The relative angular disposition between the two frames (4,8), both of inverted-U configuration, is set by varying the length to which the inner tube (12) of a telescopic draw bar (11) is extended between them. The tube (12) interconnects the frames (4,8) through a device (14) that allows adjustment, with subsequent clamped setting, of the extension of the tube (12) between that in which the frame (4) is horizontal and that in which it is in a folded condition inclined co-planar with the frame (8).

## Description

This invention relates to carts for use as trailers and/or trolleys.

The invention is concerned with carts which may take the form of a trailer for towing behind a bicycle or other vehicle, or of a trolley for pushing or pulling by hand, or which may take a form that is adaptable for either application selectively.

It is an object of the present invention to provide an improved form of cart for use as a trailer and/or trolley, that has advantages over known forms.

According to the present invention there is provided a cart for use as a trailer and/or trolley, wherein a first frame for carrying a load is mounted on a pair of wheels and a second frame is mounted for angular displacement with respect to the first frame about a substantially-horizontal pivotal axis, and wherein the cart includes a link member for interconnecting the frames with one another in setting the angular disposition of the two frames relative to one another about the pivotal axis, the length of the link member intermediate the two frames being adjustable for selective adjustment of their relative angular disposition.

The pivotal axis may be co-linear with the rotational axis of the wheels, and the first and second frames may be of inverted-U configuration. In the latter case, the first frame may be angularly displaceable relative to the second frame about the pivotal axis into a condition in which it is substantially co-planar with the second frame, and may be angularly displaceable from said co-planar condition in either sense through said second frame.

The link member, which may interconnect uppermost parts of the two frames, may be attached to the first frame and extend through selectively-operable clamping means attached to the second frame. The clamping means may be selectively operable between two states in a first of which it allows adjustment of the length of the link member effective between the two frames, and in the second of which the link member is clamped for setting that length. Furthermore, the link member may be telescopically extendable, and may project beyond the two frames to provide a draw bar for towing the cart or for pulling or pushing it by hand.

A cart according to the present invention will now be described, by way of example, with reference to the accompanying drawings, in which:
Figure 1 is a perspective view of the cart of the present invention in a folded configuration suitable for use as a trolley for pushing or pulling by hand;
Figures 2 and 3 are perspective views of the cart of Figure 1, when erected in upright and fully-unfolded configurations respectively, suitable for use as a trailer for towing;
Figure 4 is a perspective view of the cart of Figure 1 when in the fully-unfolded trailer configuration of Figure 3, hitched to the rear of a bicycle;
Figure 5 is an exploded perspective view of part of the cart of the invention, illustrating pivotal mounting of inner and outer frames of the cart;
Figure 6 is a perspective view of a clamping device forming part of the cart of the invention; and
Figures 7 to 9 are illustrative of the cart of the invention used as a trailer towed by a bicycle, when in horizontal, inclined and fully-folded configurations respectively.

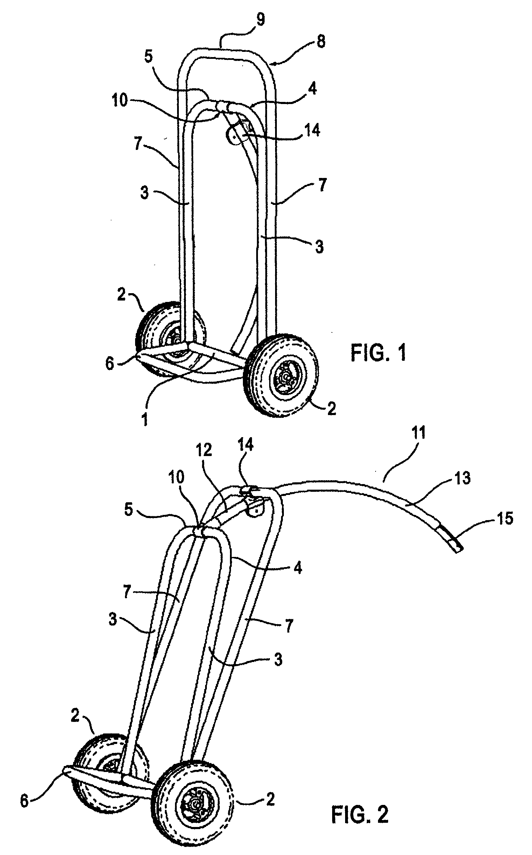

Referring to Figures 1 to 4, a bottom tubular-rail 1 extends between the two wheels 2 of the cart, and it is to the two ends of the rail 1 that side-limbs 3 of a load-carrying tubular-frame 4 of inverted-U configuration are secured. The frame 4, which to the extent defined by the limbs 3 and their interconnecting upper and bottom rails 4 and 1 is generally planar, has a right-angled tubular-extension that forms a load-carrying step 6 projecting from the rail 1.

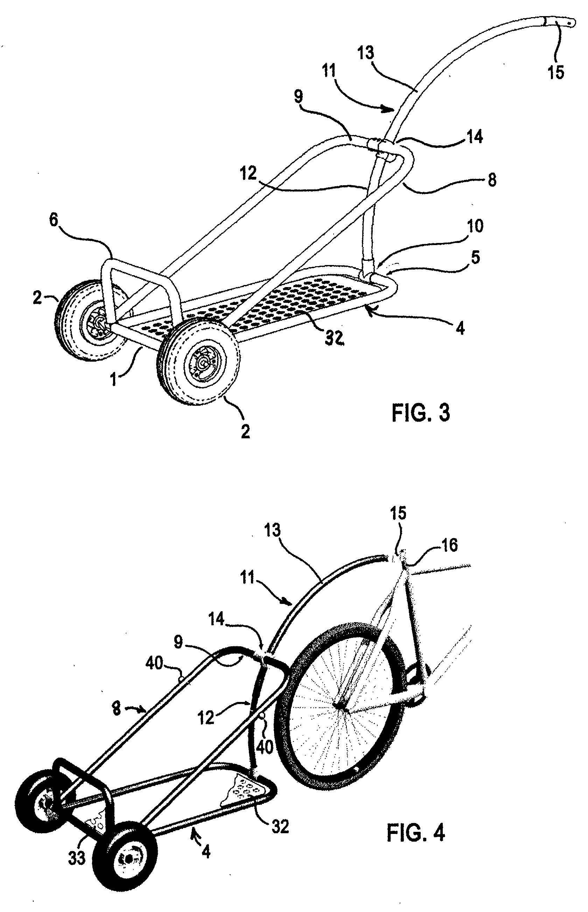

The side-limbs 7 of a second tubular-frame 8 of inverted-U configuration are mounted at the two ends of the rail 1 for pivotal movement with respect to the frame 4. The frame 8, which has a top rail 9 interconnecting the two side-limbs 7, is generally planar and is both wider and longer than the frame 4, so that the frames 4 and 8 can be pivoted relative to one another in either sense from the co-planar, folded configuration represented in Figure 1, to the forward configuration represented in Figure 2, and the rearward configuration represented in Figures 3 and 4.

A moulded-plastics coupling 10 attaches an elongate link-member 11 to the upper rail 5 of the frame 4. The coupling 10 is rotatable about the rail 5 so as to enable the member 11 to be swung upwardly from its detached condition shown in Figure 1 to pass under or over the rail 9 of the frame 8 as illustrated, respectively, in Figures 2 and Figures 3 and 4. The member 11 is curved in an arc of substantially-constant radius, and is telescopic in that it includes an inner tube 12 which is attached to the coupling 10 and which slides in and out within a longer, outer tube 13. A clamping device 14 carried on the tube 13 is operable for clamping the tube 12 from movement within the tube 13, and also for attaching the member 11 to the upper rail 9 of the frame 8; the length of the tube 12 extended between the frames 4 and 8 determines their relative angular disposition. The elongate, curved member 11 functions as a draw bar and in this respect has a flexible coupling 15 at its distal end for attachment of the cart to the seat post 16 of a bicycle as illustrated in Figure 4.

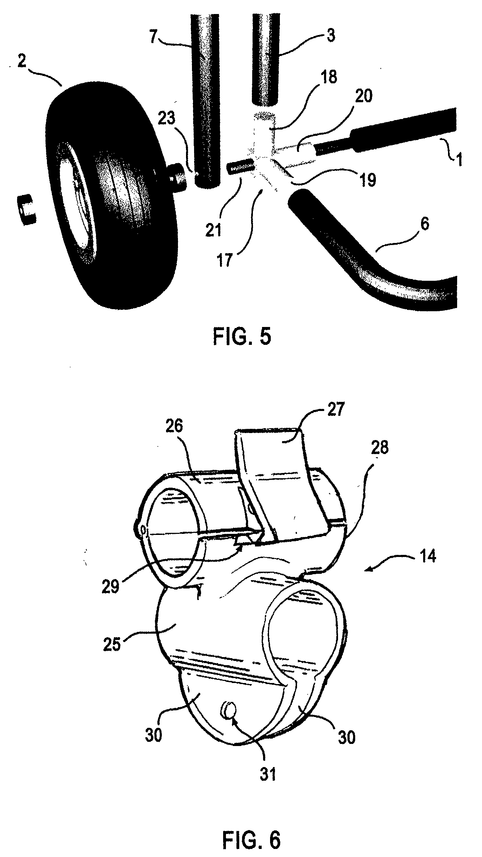

The mounting of the frames 4 and 8 with one another and the wheel 2 on one side of the cart, is illustrated in Figure 5, and will now be described.

Referring to Figure 5, the tubular limb 3 adjacent the wheel 2, the step 6 and the rail 1 of the frame 4 are held together by a moulded-plastics or metal coupling 17. The coupling 17 has three mutually-perpendicular spigots 18 to 20 that are pushed into the ends respectively of the limb 3, the step 6 and the rail 1, and are secured there by adhesive or mechanical fastener. The wheel 2 is rotatably mounted on a spindle 21 (common to both wheels 2) that is located within the tubular rail 1 and extends through a closely-fitting bore of the coupling 17. The spindle 21 projects from the coupling 17 through a closely-fitting bore 23 at the bottom end of the respective limb 7 of the frame 8, so that with a corresponding assembly at the other wheel 2, the frames 4 and 8 are pivotally mounted independently of one another on the spindle 21. The frames 4 and 8 accordingly have a common pivotal axis that is co-linear with the horizontal, rotational axis of the wheels 2, and when free of restraint by the link member 11, can be varied in their angular disposition relative to one another about this common axis.

With the link member 11 deployed to interconnect the frames 4 and 8, the clamping device 14 is attached to the rail 9 and the tube 12 is extended from the tube 13 to adjust their relative angular disposition. Once the desired relative disposition has been reached it is set by operating the device 14 to clamp the tube 12 from movement relative to the tube 13. The form of the clamping device 14 and its operation in this regard will now be described with reference to Figure 6.

Referring to Figure 6, the clamping device 14 involves a split clamping-collar 25 for sliding on the tube 13 of the link member 11, and a hinged jaw 26 for closing over the rail 9 in attaching the link member 11 to the frame 8. The jaw 26, which carries a locking lever 27, is closed over the rail 9 onto a lower jaw 28 of the device 14, and is then locked closed with an over-centre action by operation of the lever 27 when engaged with a step 29 of the jaw 28. This attaches the device 14 to the rail 9 with a fit that is light enough to allow it to swivel round the rail 9 when this is appropriate for change of orientation of the link member 11.

The split clamping-collar 25 of the device 14 has two wings 30 that are pulled together in order to clamp the collar 25 firmly on the tube 13 in setting the extended length of the tube 12. The pulling together of the wings 30 to operate the clamping device 14 is effected by means of a quick-release fastener (not shown) that is engaged with holes 31 in the wings 30. More particularly, the collar 25 is located on the near end of the tube 13 where the inner tube 12 emerges, and operation of the device 14 squeezes the tube 13 onto the tube 12 so that it cannot move into or out of the tube 13; the end of the tube 13 within the collar 25 is split so as to enhance the clamping effect.

The cart may be used to carrying loads of varying kind, and in this regard the frame 4 is shown in Figures 3 and 4 fitted with a perforated, light-alloy tray 32, and similarly, as shown in Figure 4, with a perforated light-metal tray 33 within the step 6 (the trays 32 and 33 are shown partly broken away in Figure 4). Either or both trays 32 and 33 may be replaced by sheet plastics, metal wire, expanded metal-mesh, stretched cord, or netting. For some applications a bag or a collapsible box-container may be attached to the frame 4 and may be secured to it using hooks interconnected with lengths of shock-cord.

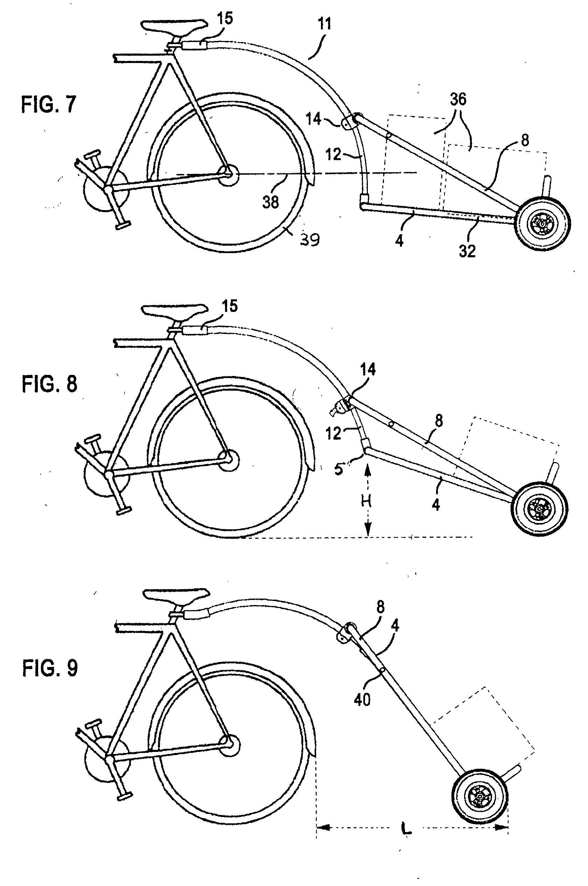

Use of the cart in three possible configurations, when towed by a bicycle, is illustrated in Figures 7 to 9. In Figure 7 the cart is shown in its fully unfolded state with the frame 4 and load-supporting plate 32 substantially parallel to the ground. The frames 4 and 8 in this configuration form, with the tube 12 fully extended, a large triangular structure. This enables a large load 36 to be accommodated on the frame 4, with the centre of gravity of the cart near or below the level 38 of the centre of the rear wheel 39 of the bicycle; a low centre of gravity improves stability of the towed cart. The enclosing frame 8 acts to retain the load 36 in place.

The cart is shown in Figure 8 in a semi-folded condition in which the frame 4 is inclined and forms with the frame 8 and the partly retracted tube 12, a smaller triangular structure than in the configuration of Figure 7. The leading bottom edge of the cart provided by the rail 5 is raised to a height *H* above the ground. The cart in this configuration is better adapted for traversing uneven ground, especially in the circumstances of mountain or other off-road use. The height *H* can be varied to suit the circumstances and the load carried, without unhitching the cart from the bicycle, simply by releasing the clamping action of the device 14 on the tube 12 and adjusting the length of the tube 12 before clamping it again.

Figure 9 shows the cart folded with the two frames 4 and 8 held in substantially the same plane as one another by increased retraction of the tube 12 within the tube 13. The frames 4 and 8 are additionally locked together releasably in this configuration by engagement of a pair of sprung retaining pins 40 located on the limbs 7 of the member 8, in holes (not shown) in the limbs 3 of the frame 4. In the fully-folded configuration the length L added to the bicycle by the cart is significantly reduced, giving advantages when used in busy streets where manoeuvrability through traffic is important.

Use of the retaining pins 40 to lock the frames 4 and 8 together in the co-planar folded configuration is of advantage in the circumstances such as that illustrated in Figure 1. In these circumstances the clamping device 14 is released from the rail 9 to detach the link member 11 from the frame 8 and to fold the member 11 down the back of the frame 4, so that the cart can be used in the manner of a sack barrow or upright trolley for pushing and pulling by hand on the rail 9.

The frames 4 and 8 of the cart need not be of open-frame metal-tube construction but may be of moulded plastics.

## Claims

1. A cart for use as a trailer and/or trolley, wherein a first frame for carrying a load is mounted on a pair of wheels and a second frame is mounted for angular displacement with respect to the first frame about a substantially-horizontal pivotal axis, and wherein the cart includes a link member for interconnecting the frames with one another in setting the angular disposition of the two frames relative to one another about the pivotal axis, the length of the link member intermediate the two frames being adjustable for selective adjustment of their relative angular disposition.

2. A cart according to Claim 1 wherein the pivotal axis is co-linear with the rotational axis of the wheels.

3. A cart according to Claim 1 or Claim 2 wherein the first and second frames are of inverted-U configuration, and the first frame is angularly displaceable relative to the second frame about the pivotal axis into a condition in which it is substantially co-planar with the second frame.

4. A cart according to Claim 3 wherein the first frame is angularly displaceable from said co-planar condition in either sense through said second frame.

5. A cart according to any one of Claims 1 to 4 wherein the link member interconnects uppermost parts of the two frames.

6. A cart according to any one of Claims 1 to 5 wherein the link member is attached to the first frame and extends through selectively-operable clamping means attached to the second frame, the clamping means being selectively operable between two states in a first of which it allows adjustment of the length of the link member effective between the two frames, and in the second of which the link member is clamped for setting that length.

7. A cart according to Claim 6 wherein the link member is telescopically extendable.

8. A cart according to Claim 7 wherein the link member is telescopically extendable between the two frames for varying its length between them.

9. A cart according to any one of Claims 1 to 8 wherein the link member is curved.

10. A cart according to any one of Claims 1 to 9 wherein the link member projects beyond the two frames to provide a draw bar.
